**Europäisches Patentamt**

**European Patent Office**

**Office européen des brevets**

(19)

(11) Veröffentlichungsnummer: **0 392 203**
**A1**

## (12) EUROPÄISCHE PATENTANMELDUNG

(21) Anmeldenummer: **90104797.7**

(22) Anmeldetag: **14.03.90**

(51) Int. Cl.⁵: **B01J 35/00, B01J 23/86**

(30) Priorität: **08.04.89 DE 3911619**

(43) Veröffentlichungstag der Anmeldung:
**17.10.90 Patentblatt 90/42**

(84) Benannte Vertragsstaaten:
**DE FR GB IT SE**

(71) Anmelder: **VACUUMSCHMELZE GMBH**
**Grüner Weg 37 Postfach 2253**
**D-6450 Hanau 1(DE)**

(72) Erfinder: **Emmerich, Kurt, Dr.**
**Im Sand 2**
**D-8755 Alzenau(DE)**
Erfinder: **Grote, Ewald**
**Glauburgstrasse 12**
**D-6475 Glauberg(DE)**
Erfinder: **Frölich, Karl, Dr.**
**In der Gartel 16/18**
**D-6458 Rodenbach(DE)**

(54) **Duktiles Halbzeug auf Eisen-Chrom-Aluminium-Basis zur Verwendung als Trägermaterial für Katalysatoren.**

(57) Zur Herstellung von Katalysatorträgern werden Eisen-Chrom-Aluminium-Basislegierungen mit hohem Aluminiumgehalt in Form von Folien oder Bändern verwendet. Die Materialien müssen ausreichend duktil sein, um eine Herstellung der Katalysatorträger zu ermöglichen und um Ausfälle durch die sehr hohe mechanische Belastung während des Betriebs durch den Abgas-Staudruck und mechanische Erschütterungen zu vermeiden. Durch die hohen Temperaturen während des Betriebs tritt jedoch eine Versprödung des Materials durch Kornvergröberung infolge von Rekristallisation ein. Bei den erfindungsgemäßen Folien und Bändern wird durch eine zumindest einseitig vorhandene mikroskopische Oberflächenrauhigkeit von > 0,3 μm eine Kornvergröberung vermieden. Die mikroskopische Rauhigkeit kann durch mechanisches Aufrauhen oder Laserpunkten oder bei Herstellung der Bänder in einem Rascherstarrungsverfahren durch zwischen Walze und Band eingezogene Luftblasen erreicht werden.

Fig. 2

EP 0 392 203 A1

## Duktiles Halbzeug auf Eisen-Chrom-Aluminium-Basis und seine Verwendung als Trägermaterial für Katalysatoren

Die Erfindung betrifft ein duktiles metallisches Halbzeug nach dem Oberbegriff des Patentanspruchs 1.

Aus der DE-OS 36 21 569 und der DE-OS 38 13 685 sind rostfreie Folien oder Bändern auf Eisen-Chrom-Aluminium-Basis zur Verwendung als Trägermaterial für Katalysatoren, insbesondere in der Kraftfahrzeugtechnik bekannt. Für diese Anwendung werden möglichst dünne Bänder angestrebt, um eine möglichst große Oberfläche auf kleinem Raum erreichen zu können. Die typische Dicke liegt bei etwa 50 µm. Die Bänder oder Folien müssen ausreichend duktil sein, um die bei der Herstellung von Katalysatorträgern erforderlichen engen Biegeradien zu ermöglichen. Zudem müssen sie eine hohe Oxidationsbeständigkeit aufweisen. Hierzu sind Bänder oder Folien mit einem hohen Aluminiumgehalt erforderlich, wie sie aus den bereits obengenannten Offenlegungsschriften bekannt sind.

In der DE-OS 36 21 569 wird als Verfahren zur Herstellung einer trotz des hohen Aluminiumgehaltes duktilen Chrom-Aluminium-Eisen-Legierung ein schnelles Abschrecken der Schmelze an einer sich bewegenden Kühlfläche beschrieben. Durch die schnelle Abschreckung wird das Kristallwachstum begrenzt und die Ausbildung mechanisch spröder Phasen wird zu höheren Aluminium- und Chromgehalten hin verschoben.

Die in der DE-OS 38 13 685 beschriebenen Folien wurden auf konventionelle Art durch ein übliches Schmelzverfahren, gefolgt vom Gießen als Block oder durch Stranggießen als Bramme, Warmwalzen und Kaltwalzen gefertigt.

Aufgrund der hohen Anwendungstemperaturen im Katalysator muß bei den bekannten Folien oder Bändern jedoch mit einer Kornvergröberung durch Rekristallisation während des Betriebs gerechnet werden. Eine solche Kornvergröberung vermindert die Duktilität des Materials. Zudem reichern sich unvermeidliche Verunreinigungen an den Korngrenzen an und führen zu einer weiteren Versprödung. Dies hat zur Folge, daß Ausfälle des Katalysators durch die sehr hohe mechanische Belastung während des Betriebes durch den Abgas-Staudruck und mechanische Erschütterungen eintreten.

Aufgabe der Erfindung ist es, die bekannten Folien oder Bänder auf Eisen-Chrom-Aluminium-Basis so zu verbessern, daß auch bei hohen Temperaturen, wie sie beispielsweise beim Betrieb des Katalysators auftreten, eine Versprödung des Materials durch Kornvergröberung in Folge von Rekristallisation vermieden wird. Die Aufgabe wird durch die kennzeichnenden Merkmale des Patentanspruchs 1 gelöst.

Zur Bestimmung der mikroskopischen Rauhigkeit wird entsprechend der DIN Norm 4768 eine Einzelmeßstrecke von nicht mehr als 1 mm zugrunde gelegt. Durch die an zumindest einer Seite des Bandes oder der Folie vorhandene mikroskopische Rauhigkeit wird erreicht, daß die Korngrenzen an den lokal dünneren Stellen des Materials hängenbleiben (Pinning). Hierdurch wird eine Kornvergröberung durch Rekristallisation und damit eine Versprödung während des Betriebs auch bei Betriebstemperaturen oberhalb von 1000 °C vermieden. Die mikroskopische Rauhigkeit des Halbzeugs muß größer als 0,3 µm, vorteilhafterweise größer als 0,5 µm sein.

Um eine gute Oxidationsbeständigkeit zu gewährleisten, ist ein Aluminiumgehalt von 8 % und mehr vorteilhaft. Die erfindungsgemäßen Folien oder Bänder können dadurch hergestellt werden, daß die mikroskopische Rauhigkeit in einem zusätzlichen Arbeitsgang durch mechanisches Aufrauhen oder durch Laserpunkten hergestellt wird. Bei Herstellung eines Bandes durch schnelles Abschrecken direkt aus der Schmelze an einer sich bewegenden Kühlfläche kann die mikroskopische Rauhigkeit ohne zusätzliche Verfahrensschritte erzeugt werden. Die gewünschte mikroskopische Rauhigkeit kann dann beispielsweise durch geeignete Wahl der Geschwindigkeit der sich bewegenden Kühlfläche erreicht werden, wobei die Rauhigkeit einseitig durch Luftblasen verursacht wird, die zwischen Band und Kühlfläche eingezogen werden. Sie kann weiterhin durch eine geeignete Oberflächenbeschaffenheit der Kühlfläche erreicht werden.

Anhand der Figuren und der Ausführungsbeispiele wird die Erfindung im folgenden näher erläutert. Es zeigen:

Fig. 1 den Verlauf der Rauhigkeit eines erfindungsgemäßen durch Schnellabschreckung hergestellten Bandes

Fig. 2 das Gefüge eines erfindungsgemäßen Halbzeugs nach einer Glühbehandlung von 1 Stunde bei 1100 °C an Luft

Fig. 3 das Gefüge eines Halbzeugs nach dem Stand der Technik nach einer Glühung von 1 Stunde bei 1100 °C an Luft

Es wurde eine Reihe von Legierungen auf Eisen-Chrom-Aluminium-Basis mit verschiedenen lebensdauerverlängernden Zusätzen in unterschiedlicher Konzentration hergestellt. Die jeweiligen Anteile an Chrom, Aluminium und lebensdauerverlängernden Zusätzen X in Gew.-% sind in Tabelle 1 aufgelistet (Rest jeweils

EP 0 392 203 A1

Eisen). Die Bänder wurden in der Rascherstarrungstechnik mit einem Einwalzengießverfahren hergestellt. Sie wurden verschiedenen Glühbehandlungen unterworfen, um die Oxidationseigenschaften und die Rekristalli sation zu untersuchen. In Tabelle 2 sind Eisen-Chrom-Aluminium-Basis-Legierungen mit einem Ce-Zusatz aufgelistet. Zur Beurteilung der Oxidationsbeständigkeit ist die Zeit angegeben, nach der eine Gewichtszunahme von 10 % durch Sauerstoffaufnahme bei einer Glühung von 1200 °C an Luft eingetreten ist. Eine sehr gute Oxidationsbeständigkeit wird mit solchem Material erreicht, das einen Chromanteil von nicht mehr als 25 Gew.-% und einen Aluminiumanteil von nicht weniger als 8 Gew.-% aufweist. Geeignete Banddicken für die Verwendung in Katalysatoren erstrecken sich von etwa 15 bis 100 μm. Die Werte in Tabelle 2 belegen, daß mit solchen Folien eine relative Massenzunahme durch Oxidation von weniger als 10 % nach einer mindestens 100-stündigen Glühung an Luft erreicht wird.

Da eine Vergröberung des Gefüges durch Rekristallisation zu einer Versprödung des Materials führen kann, weisen die erfindungsgemäßen Bänder und Foien eine mikroskopische Rauhigkeit von mindestens 0,3 μm, vorzugsweise mindestens 0,5 μm, an zumindest einer Seite des Halbzeugs auf.

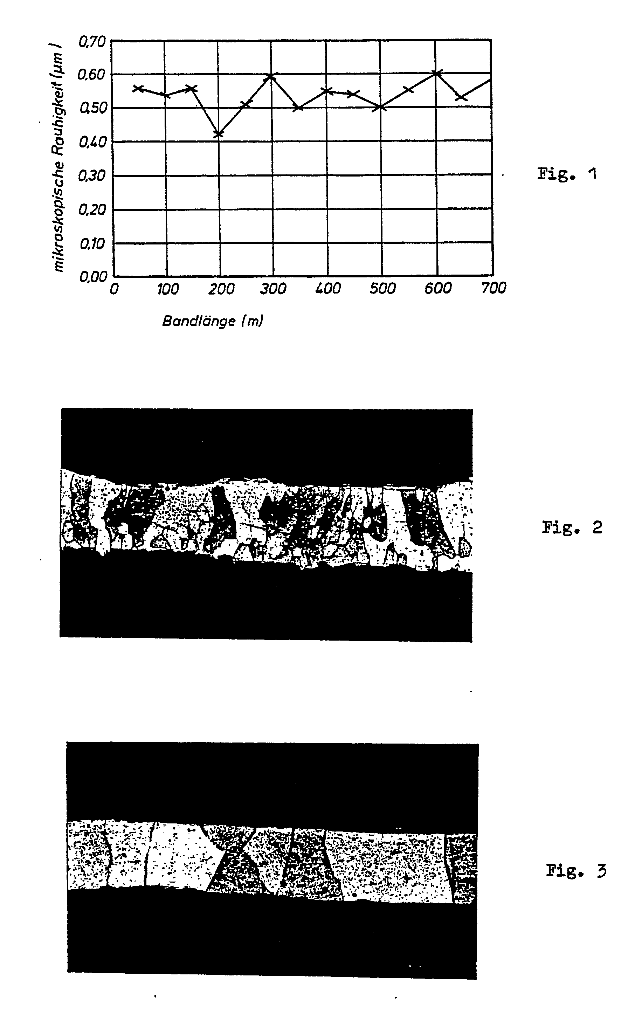

Fig. 1 zeigt den typischen Verlauf der gemessenen mikroskopischen Rauhigkeit eines direkt gegossenen Bandes auf der Walzenkontaktseite. Zur Erzeugung der Rauhigkeit wurden durch die Luftgrenzschicht gezielt Luftblasen eingezogen.

Fig. 2 zeigt das Gefüge eines erfindungsgemäßen Halbzeuges mit einem Chromanteil von 22 Gew.-% und einem Aluminiumanteil von 8 Gew.-% nach einer Glühbehandlung von 1 Stunde bei 1100 °C an Luft. Durch die erfindungsgemäße mikroskopische Rauhigkeit des Bandes von mindestens 0,3 μm wird eine Kornvergröberung durch Rekristallisation vermieden.

Zum Vergleich ist in Fig. 3 das Gefüge eines konventionell gewalzten Eisen-Chrom-Aluminiumbandes mit einem Chromanteil von 23 Gew.-% und einem Aluminiumanteil von 5 Gew.-% darge stellt. Dieses Band wies eine mikroskopische Rauhigkeit von weniger als 0,3 μm auf. Nach einer Glühbehandlung von 1 Stunde bei 1100 °C an Luft ist eine deutliche Kornvergröberung durch Rekristallisation erkennbar. Diese Kornvergröberung führt zu einer Versprödung des Bandes.

Mit den erfindungsgemäßen Folien und Bändern ist es somit möglich, Katalysatorträger mit verbesserten Eigenschaften im Betrieb herzustellen. Sie tragen zu einer Verringerung der Ausfallrate von Abgaskata-lysatoren bei.

3

Tabelle 1

| Cr | Al | X | (Gew.-%) |
|---|---|---|---|
| 10,0 | 11,1 | Ce | 0,03 |
| 9,9 | 10,3 | Ce | 0,02 |
| 9,9 | 11,5 | Ce | 0,03 |
| 17,4 | 11,0 | Ce | 0,04 |
| 18,2 | 11,5 | Ce | 0,04 |
| 22,0 | 8,5 | Ce | 0,04 |
| 21,2 | 8,5 | Ce | 0,02 |
| 22,2 | 7,8 | Ce | 0,03 |
| 22,0 | 8,0 | Ce | 0,05 |
| 11,7 | 12,1 | Ce | 0,05 |
| 13,8 | 12,1 | Ce | 0,04 |
| 16,7 | 8,4 | Ce | 0,02 |
| 17,9 | 12,6 | Ce | 0,06 |
| 19,9 | 12,9 | Ce | 0,05 |
| 21,6 | 12,8 | Ce | 0,03 |
| 21,6 | 11,7 | Ce | 0,05 |
| 25,5 | 10,5 | Ce | 0,06 |
| 21,9 | 8,9 | Ce | 0,07 |
| 22,2 | 8,2 | Ce | 0,17 |
| 18,7 | 7,0 | Ce | 0,11 |
| 22,7 | 6,8 | Ce | 0,06 |
| 21,5 | 6,9 | Ce | 0,21 |
| 26,5 | 10,1 | Ce | 0,03 |
| 10,5 | 4,5 | Ce | 0,27 |
| 12,0 | 14,2 | Ce | 0,07 |
| 15,2 | 13,8 | Ce | 0,04 |
| 18,4 | 14,8 | Ce | 0,02 |
| 20,3 | 5,8 | Ce | 0,06 |
| 22,0 | 8,1 | Y | 0,04 |
| 14,5 | 12,6 | Y | 0,12 |
| 16,8 | 13,5 | Y | 0,07 |
| 20,7 | 8,7 | Y | 0,25 |
| 21,3 | 6,8 | Y | 0,11 |
| 22,0 | 8,3 | La | 0,06 |
| 21,5 | 11,3 | Ti | 0,36 |
| 18,7 | 12,5 | Ti | 0,81 |
| 19,5 | 12,0 | Zr | 0,35 |
| 16,9 | 10,3 | Nb | 0,14 |
| 18,5 | 7,5 | Nb | 0,09 |
| 19,2 | 8,9 | Hf | 0,15 |
| 19,5 | 11,3 | Ca | 0,005 |
| 22,3 | 12,0 | Ba | 0,005 |
| 18,3 | 7,5 | Mg | 0,006 |

# EP 0 392 203 A1

Tabelle 2

| Cr | Al | Ce | Fe | Dicke | Zeit |
|---|---|---|---|---|---|
| Gewichts - % | | | | μm | h |
| 18.16 | 11.54 | 0.04 | Rest | 49.0 | 144.0 |
| 18.04 | 10.82 | 0.04 | | 45.0 | 132.0 |
| 21.87 | 8.10 | 0.03 | | 37.2 | 125.0 |
| 22.37 | 7.96 | 0.05 | | 45.0 | 192.0 |
| 11.68 | 12.10 | 0.05 | | 41.0 | 272.0 |
| 13.75 | 12.10 | 0.04 | | 41.0 | 296.0 |
| 19.89 | 12.92 | 0.05 | | 39.4 | 210.0 |
| 21.60 | 12.85 | 0.03 | | 43.1 | 506.0 |
| 21.66 | 11.71 | 0.05 | | 44.1 | 380.0 |
| 25.49 | 10.52 | 0.06 | | 36.9 | 131.0 |
| 21.92 | 8.24 | 0.04 | | 35.2 | 142.0 |
| 21.92 | 8.92 | 0.07 | | 43.8 | 142.0 |
| 22.14 | 7.42 | 0.09 | | 45.0 | 110.0 |
| 26.50 | 10.13 | 0.03 | | 37.7 | 185.0 |
| 20.14 | 8.68 | 0.02 | | 43.0 | 121.0 |

## Ansprüche

1. Duktiles, metallisches Halbzeug in Form von Folien oder Bändern, das im wesentlichen aus Eisen, 10 bis 30 Gew.-% Chrom, 4 bis 15 Gew.-% Aluminium und 0,005 bis 1 Gew.-% lebensdauererhöhenden Zusätzen wie Seltene Erden, Y, Ti, Zr, Hf, Nb, Ca, Ba, Mg besteht, **dadurch gekennzeichnet,** daß das Halbzeug zumindest einseitig eine mikroskopische Oberflächenrauhigkeit von Ra > 0,3 μm aufweist.

2. Halbzeug nach Patentanspruch 1, **gekennzeichnet durch** eine mikroskopische Rauhigkeit Ra > 0,5 μm.

3. Halbzeug nach Patentanspruch 1, **dadurch gekennzeichnet,** daß es nicht mehr als 25 Gew.-% Chrom und nicht weniger als 8 Gew.-% Aluminium enthält.

4. Halbzeug nach Anspruch 3, **dadurch gekennzeichnet,** daß es eine relative Massezunahme durch Oxidation von weniger als 10 % nach einer mindestens 100-stündigen Glühung an Luft bei einer Temperatur von 1200 °C aufweist.

5. Verwendung eines Halbzeugs nach Patentanspruch 1 als Trägermaterial in Katalysatoren.

5

Fig. 1

Fig. 2

Fig. 3

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | DE-A-3 706 415 (THYSSEN)<br>--- | | B 01 J 35/00<br>B 01 J 23/86 |
| A | DE-A-3 640 025 (TOYOTA)<br>--- | | |
| A | DE-A-2 422 851 (UNITED KINGDOM ATOMIC ENERGY AUTHORITY)<br>----- | | |
| | | | RECHERCHIERTE SACHGEBIETE (Int. Cl.5)<br><br>B 01 J |

Der vorliegende Recherchenbericht wurde für alle Patentansprüche erstellt

| Recherchenort | Abschlußdatum der Recherche | Prüfer |
|---|---|---|
| DEN HAAG | 24-07-1990 | THION M.A. |